# EUROPÄISCHE PATENTANMELDUNG

(11) **EP 4 206 600 A1**
(43) Veröffentlichungstag der Anmeldung: **05.07.2023**
(21) Anmeldenummer: 22214001.4
(22) Anmeldetag: 15.12.2022
(51) Int. Cl.: F28D 9/04, F28D 21/00, F28F 21/06, F28F 21/08, F28G 7/00

(54) **WÄRMEÜBERTRAGER, WASSERAUFBEREITUNGSANLAGE**

(30) Priorität: 30.12.2021 DE 102021215089
(71) Anmelder: Robert Bosch GmbH, 70442 Stuttgart (DE)
(72) Erfinder: Ohlhafer, Olaf, 74391 Erligheim (DE); Marcelino Pinheiro, Joana, 70499 Stuttgart (DE); Martens, Sebastian, 71034 Boeblingen (DE); Dukart, Anton, 70839 Gerlingen (DE)

(57) **Zusammenfassung**

Die Erfindung betrifft einen Wärmeübertrager, aufweisend ein Gehäuse, einen ersten Fluidraum, einen zweiten Fluidraum, einen ersten Fluidraumeinlass und einen ersten Fluidraumauslass des ersten Fluidraums, sowie einen zweiten Fluidraumeinlass und einen zweiten Fluidraumauslass des zweiten Fluidraums. Das Gehäuse weist eine zylindrische Form auf. Der erste Fluidraum und der zweite Fluidraum sind innerhalb des Gehäuses angeordnet. Der erste Fluidraum ist vom zweiten Fluidraum mittels einer Folie getrennt. Die Folie weist zumindest einen ersten Folienabschnitt und einen zweiten Folienabschnitt auf. Der erste Folienabschnitt und der zweite Folienabschnitt sind zu einer Spirale aufgewickelt. Erste Abstandshalter sind zwischen dem ersten Folienabschnitt und dem zweiten Folienabschnitt angeordnet und zweite Abstandshalter sind zwischen dem zweiten Folienabschnitt und dem ersten Folienabschnitt angeordnet derart, dass der erste Fluidraum vom ersten Folienabschnitt, vom zweiten Folienabschnitt und von den ersten Abstandshaltern begrenzt wird und dass der zweite Fluidraum vom ersten Folienabschnitt, vom zweiten Folienabschnitt und von den zweiten Abstandshaltern begrenzt wird. Die ersten Abstandshalter sind zumindest teilweise in einer ersten Richtung auf dem ersten Folienabschnitt angeordnet. Die zweiten Abstandshalter sind zumindest teilweise in einer zweiten Richtung auf dem zweiten Folienabschnitt angeordnet. Die erste Richtung und die zweite Richtung sind linear unabhängig.

## Beschreibung

Die Erfindung betrifft einen Wärmeübertrager, insbesondere einen Spiralwärmeübertrager, und eine Wasseraufbereitungsanlage.

### Stand der Technik

Es sind Wärmeübertrager, insbesondere Spiralwärmeübertrager, bekannt bei denen ein längliches rechteckiges Metallblech längs auf etwa die halbe Länge zusammengefaltet und dann von der Falzstelle beginnend, zu einer Spirale aufgewickelt wird. Zwischen den Metallblechstreifen entstehen zwei voneinander getrennte Räume, die spiralförmig ineinander gewickelt sind, jedoch stirnseitig noch offen sind. Die Stirnseiten des aufgewickelten Metallblechs werden durch Schweißen verschlossen oder es werden andersartig zwei abgedichtete runde Spanndeckel beispielsweise durch Zuganker und Dichtungen angebracht. Zudem werden vier Anschlüsse angebracht, durch die die beiden Medien ein- und austreten (zwei Anschlüsse an der Falzstelle und zwei Anschlüsse am Spiralenende). Diese Anschlüsse können auch in den Spanndeckeln sein. Spiralwärmeübertrager werden normalerweise als Gegenstromwärmeübertrager betrieben. Diese Spiralwärmeübertrager weisen eine sehr hohe Neigung auf, zu verkalken.

### Offenbarung der Erfindung

Eine Aufgabe der Erfindung ist es, einen verbesserten Wärmeübertrager bereitzustellen. Eine weitere Aufgabe der Erfindung ist es, eine Wasseraufbereitungsanlage mit einem solchen Wärmeübertrager bereitzustellen.

Diese Aufgaben werden mit den Gegenständen der unabhängigen Patentansprüche gelöst. Vorteilhafte Weiterbildungen sind in den abhängigen Patentansprüchen angegeben.

Die Erfindung betrifft einen Wärmeübertrager, aufweisend ein Gehäuse, einen ersten Fluidraum, einen zweiten Fluidraum, einen ersten Fluidraumeinlass und einen ersten Fluidraumauslass des ersten Fluidraums, sowie einen zweiten Fluidraumeinlass und einen zweiten Fluidraumauslass des zweiten Fluidraums. Das Gehäuse weist eine zylindrische Form auf. Der erste Fluidraum und der zweite Fluidraum sind innerhalb des Gehäuses angeordnet. Der erste Fluidraum ist vom zweiten Fluidraum mittels einer Folie getrennt. Die Folie weist zumindest einen ersten Folienabschnitt und einen zweiten Folienabschnitt auf. Der erste Folienabschnitt und der zweite Folienabschnitt sind zu einer Spirale aufgewickelt. Erste Abstandshalter sind zwischen dem ersten Folienabschnitt und dem zweiten Folienabschnitt angeordnet und zweite Abstandshalter sind zwischen dem zweiten Folienabschnitt und dem ersten Folienabschnitt angeordnet derart, dass der erste Fluidraum vom ersten Folienabschnitt, vom zweiten Folienabschnitt und von den ersten Abstandshaltern begrenzt wird und dass der zweite Fluidraum vom ersten Folienabschnitt, vom zweiten Folienabschnitt und von den zweiten Abstandshaltern begrenzt wird. Die ersten Abstandshalter sind zumindest teilweise in einer ersten Richtung auf dem ersten Folienabschnitt angeordnet. Die zweiten Abstandshalter sind zumindest teilweise in einer zweiten Richtung auf dem zweiten Folienabschnitt angeordnet. Die erste Richtung und die zweite Richtung sind linear unabhängig.

Die zylindrische Form des Gehäuses kann insbesondere einen geraden Zylinder mit kreisförmiger oder ellipsoider Leitkurve aufweisen. Ferner kann die Leitkurve eine Spiralwindung umfassen. Ein Durchmesser des Zylinders kann beispielsweise im Bereich zwischen fünf und dreißig Zentimetern liegen, insbesondere zwischen acht und fünfzehn Zentimetern. Eine Höhe des Zylinders kann beispielsweise zwanzig bis dreißig Zentimeter betragen. Die Folie kann eine Foliendicke im Bereich zwischen einem hunderstel Millimeter und einem halben Millimeter aufweisen. Insbesondere kann die Foliendicke im Bereich von 0,05 bis 0,2 Millimeter liegen. Die ersten Abstandshalter und die zweiten Abstandshalter können dabei eine Dicke zwischen einem halben und fünf Millimetern aufweisen, so dass ein Abstand zwischen dem ersten Folienabschnitt und dem zweiten Folienabschnitt beziehungsweise zwischen dem zweiten Folienabschnitt und dem ersten Folienabschnitt ebenfalls zwischen einem halben und fünf Millimetern ist. Insbesondere kann der Abstand einen Millimeter betragen. Wird der Wärmeübertrager mit einer Flüssigkeit als Fluid im ersten Fluidraum und/oder zweiten Fluidraum betrieben, kann ein Durchfluss des Fluids kleiner als zehn Milliliter pro Sekunde sein und insbesondere im Bereich von einem Milliliter pro Sekunde liegen. Sowohl die Folie als auch die Abstandshalter können aus einem Material gefertigt sein, das bis 130 Grad Celsius, insbesondere bis 150 Grad Celsius temperaturstabil ist.

Die Folie ist deutlich weniger Anfällig für Verkalkungen, so dass der Wärmeübertrager einfacher zu warten ist. Ferner kann ein einfaches Reinigungsverfahren für den Wärmeübertrager bereitgestellt werden, bei dem über den ersten Fluidraumeinlass oder den ersten Fluidraumauslass oder den zweiten Fluidraumeinlass oder den zweiten Fluidraumauslass ein hydraulischer Druckstoß mittels eines Druckstoßerzeugers in den Wärmeübertrager eingebracht wird oder wobei das Gehäuse mittels Vibrationserzeuger in Vibration versetzt wird. Etwaige Verkalkungen werden durch den hydraulischen Druckstoß oder die Vibration von der Folie gelöst und können so aus dem Wärmeübertrager entfernt werden.

Ein erstes Fluid kann im ersten Fluidraum vom ersten Fluidraumeinlass zum ersten Fluidraumauslass geführt werden. Alternativ ist es ebenso möglich, dass das erste Fluid im ersten Fluidraum vom ersten Fluidraumauslass zum ersten Fluidraumeinlass geführt wird. Ein zweites Fluid kann im zweiten Fluidraum vom zweiten Fluidraumeinlass zum zweiten Fluidraumauslass geführt werden. Alternativ ist es ebenso möglich, dass das zweite Fluid im zweiten Fluidraum vom zweiten Fluidraumauslass zum zweiten Fluidraumeinlass geführt wird. Die Begriffe Fluidraumeinlass und Fluidraumauslass beziehen sich also auf die zwei Anschlüsse des ersten Fluidraums beziehungsweise zweiten Fluidraums unabhängig von einer Fluidflussrichtung.

In einer Ausführungsform ermöglicht der erste Fluidraum zwischen dem ersten Fluidraumeinlass und dem ersten Fluidraumauslass einen spiralförmigen ersten Fluidfluss. Der zweite Fluidraum zwischen dem zweiten Fluidraumeinlass und dem zweiten Fluidraumauslass ermöglicht einen zweiten Fluidfluss zumindest teilweise senkrecht zum ersten Fluidfluss. Dadurch wird eine einfache und kompakte Anordnung des Wärmeübertragers mit einer vorteilhaften Wärmeübertragung erreicht.

In einer Ausführungsform umfasst das Gehäuse einen Deckel, einen Boden und eine Mantelfläche. Der Deckel und der Boden bilden jeweils eine ebene geschlossene Fläche. Der erste Fluidraumeinlass ist am Deckel oder am Boden angeordnet. Der erste Fluidraumauslass ist an der Mantelfläche angeordnet. Der zweite Fluidraumeinlass ist am Deckel angeordnet. Der zweite Fluidraumauslass ist am Boden angeordnet ist. Dies ermöglicht einen kompakten Aufbau des Wärmeübertragers.

In einer Ausführungsform dichten die ersten Abstandshalter den ersten Fluidraum in Richtung des Deckels und des Bodens ab. Dies ermöglicht ebenfalls einen kompakten Aufbau des Wärmeübertragers.

In einer Ausführungsform sind der erste Folienabschnitt und der zweite Folienabschnitt mittels eines Folienfaltabschnittes der Folie verbunden.

In einer Ausführungsform sind der erste Folienabschnitt und der zweite Folienabschnitt mittels eines Innenrohres verbunden. Das Innenrohr kann mittig im Gehäuse angeordnet sein. Ferner kann das Innenrohr gegenüber dem ersten Fluidraum geöffnet und gegenüber dem zweiten Fluidraum abgedichtet sein.

In einer Ausführungsform ist die Folie eine Kunststofffolie. Die Folie kann insbesondere eine Folie aus Polyvinylidenfluorid oder Polyimid sein. Diese Materialien sind besonders unanfällig gegen Verkalkungen. Insbesondere Polyvinylidenfluorid und Polyimid sind ausreichend temperaturstabil.

In einer Ausführungsform umfassen der erste Abstandshalter und/oder der zweite Abstandshalter einen Streifen aus Klebstoff und/oder Silikon. Klebstoffe und Silikon sind ebenfalls ausreichend temperaturstabil.

Es kann alternativ vorgesehen sein, dass die Folie eine Metallfolie ist und die Abstandshalter ebenfalls aus Metall bestehen. Dann eignet sich der Wärmeübertrager insbesondere für organische Lösungsmittel im ersten Fluidraum und/oder zweiten Fluidraum.

In einer Ausführungsform weisen die ersten Abstandshalter einen in einer Richtung senkrecht zur Folie vom Inneren zum Äußeren der Spirale größer werdenden Querschnitt auf. Dies ermöglicht, im ersten Fluidraum einen Phasenübergang von flüssig nach gasförmig zu erreichen, wenn das Fluid in der Spirale von innen nach außen geführt wird oder einen Phasenübergang von gasförmig nach flüssig zu erreichen, wenn das Fluid in der Spirale von außen nach innen geführt wird. Dies ist also insbesondere dann vorteilhaft, wenn der Wärmeübertrager in Anlagen mit Phasenübergang wie beispielsweise Wasseraufbereitungsanlagen oder Wärmepumpen zum Einsatz kommen soll.

Die Erfindung betrifft ferner eine Wasseraufbereitungsanlage mit einem Einlass für Wasser, einem ersten Auslass für aufbereitetes Wasser und einem zweiten Auslass für Abwasser, einem ersten Wassergefäß, einer Verdampfer-Kondensator-Einheit und einem Kompressor. Der Einlass ist mit dem Wassergefäß verbunden. Das Wassergefäß ist mit einem Verdampfereinlass eines Verdampfers der Verdampfer-Kondensator-Einheit verbunden. Ein Verdampferauslass des Verdampfers der Verdampfer-Kondensator-Einheit ist mit einem Kondensatoreinlass eines Kondensators der Verdampfer-Kondensator-Einheit verbunden. Ein Kondensatorauslass des Kondensators der Verdampfer-Kondensator-Einheit ist mit dem ersten Auslass verbunden. Der Kompressor ist zwischen dem Verdampferauslass und dem Kondensatoreinlass angeordnet. Der Kompressor ist eingerichtet, auf der Seite des Verdampfer-auslasses einen geringeren Druck zu erzeugen als auf der Seite des Kondensatoreinlasses. Die Verdampfer-Kondensator-Einheit ist als erfindungsgemäßer Wärmeübertrager ausgestaltet.

Insbesondere der Verdampfer der Verdampfer-Kondensator-Einheit ist anfällig für Verkalkungen, so dass ein Einsatz des Erfindungsgemäßen Wärmeübertragers aufgrund der oben beschriebenen Vorteile hier vorteilhaft ist.

Ausführungsbeispiele der Erfindung werden anhand der folgenden Zeichnungen erläutert. In der schematischen Zeichnung zeigen:
- Fig. 1: zwei Folienabschnitte in einer Explosionsdarstellung;
- Fig. 2: die zwei Folienabschnitte der Fig. 1 in einer Draufsicht;
- Fig. 3: einen Querschnitt durch einen Wärmeübertrager mit den zwei Folienabschnitten der Fig. 1 und 2;
- Fig. 4: den Wärmeübertrager der Fig 3 in einer isometrischen Ansicht;
- Fig. 5: einen weiteren Querschnitt durch den Wärmeübertrager der Fig. 3 und 4;
- Fig. 6: einen Querschnitt durch einen weiteren Wärmeübertrager;
- Fig. 7: eine isometrische Ansicht eines weiteren Wärmeübertragers;
- Fig. 8: eine Draufsicht auf zwei weitere Folienabschnitte;
- Fig. 9: einen Querschnitt durch einen weiteren Wärmeübertrager; und
- Fig. 10: eine Wasseraufbereitungsanlage.

Im Folgenden werden für gleiche Elemente gleiche Bezugszeichen verwendet. Im Zusammenhang mit einer Figur erläuterte Eigenschaften können auch für die Elemente anderer Figuren vorgesehen sein, sofern dies im Text nicht explizit ausgeschlossen ist.

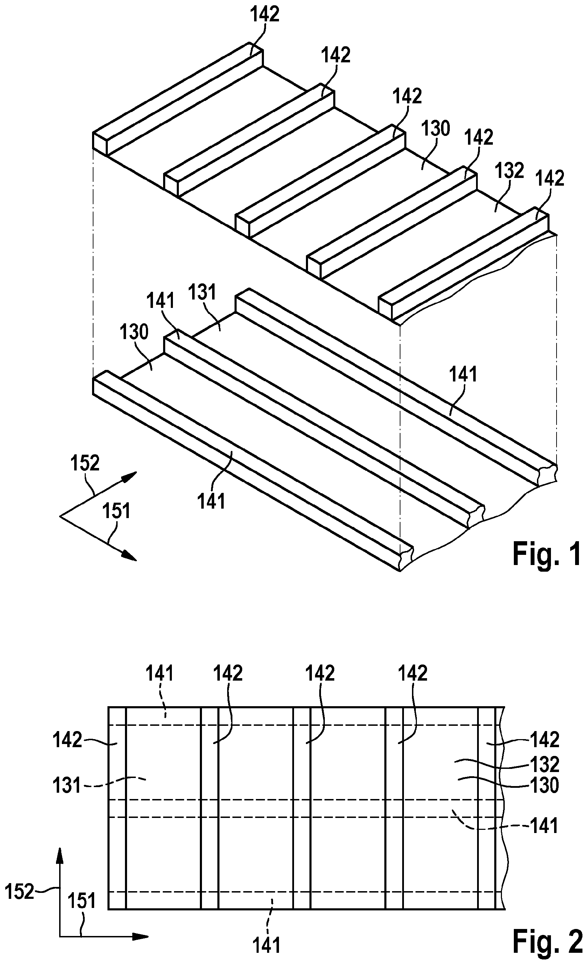

Fig. 1 zeigt einen ersten Folienabschnitt 131 und einen zweiten Folienabschnitt 132 einer Folie 130 in einer Explosionsdarstellung, wobei die Folie 130 beide Folienabschnitte 131, 132 umfassen kann oder jeder Folienabschnitt 131, 132 aus einer eigenen Folie 130 besteht. Auf dem ersten Folienabschnitt 131 sind erste Abstandshalter 141 angeordnet, die zumindest teilweise in einer ersten Richtung 151 angeordnet sind. Insbesondere sind die ersten Abstandshalter 141 vollständig in der ersten Richtung 151 angeordnet. Auf dem zweiten Folienabschnitt 132 sind zweite Abstandshalter 142 angeordnet, die zumindest teilweise in einer zweiten Richtung 152 angeordnet sind. Insbesondere sind die zweiten Abstandshalter 142 vollständig in der zweiten Richtung 152 angeordnet. In Fig. 1 stehen die erste Richtung 151 und die zweite Richtung 152 senkrecht zueinander, es kann aber auch vorgesehen sein, dass die erste Richtung 151 und die zweite Richtung nicht senkrecht zueinander stehen, sofern erste Richtung 151 und zweite Richtung 152 nicht parallel sind. Die Folienabschnitte 131, 132 sind insbesondere in der ersten Richtung 151, aber auch in der zweiten Richtung 152 verlängerbar.

Es kann vorgesehen sein, dass die Folienabschnitte 131, 132 eine Metallfolie umfassen. Dann können die Abstandshalter 141, 142 ebenfalls metallisch sein. Alternativ kann vorgesehen sein, dass die Folienabschnitte 131, 132 aus Kunststoff bestehen, also eine Kunststofffolie bilden. Der Kunststoff kann insbesondere ein Polyvinylidenfluorid (PVDF) oder Polyimid (PI) umfassen. Sowohl für Folienabschnitte 131, 132 aus Kunststoff als auch für Folienabschnitte 131, 132 aus Metall können die Abstandshalter 141, 142 einen Klebstoff und/oder ein Silikon umfassen. Die Folie 130 kann eine Foliendicke im Bereich zwischen einem hundertstel Millimeter und einem halben Millimeter aufweisen. Insbesondere kann die Foliendicke im Bereich von 0,05 bis 0,2 Millimeter liegen. Die ersten Abstandshalter 141 und die zweiten Abstandshalter 142 können eine Dicke zwischen einem halben und fünf Millimetern aufweisen, so dass ein Abstand zwischen dem ersten Folienabschnitt 131 und dem zweiten Folienabschnitt 132 ebenfalls zwischen einem halben und fünf Millimetern ist. Insbesondere kann der Abstand einen Millimeter betragen. Sowohl die Folie 130 als auch die Abstandshalter 141, 142 können aus einem Material gefertigt sein, das bis 130 Grad Celsius, insbesondere bis 150 Grad Celsius temperaturstabil ist.

Fig. 2 zeigt die Folienabschnitte 131, 132 in einer Draufsicht. Dabei ist insbesondere der zweite Folienabschnitt 132 mit den zweiten Abstandshaltern sichtbar, der erste Folienabschnitt 131 mit den ersten Abstandshaltern 141 liegt darunter und ist nur mittels gestrichelter Linien angedeutet. Aus den Folienabschnitten 131, 132 mit den Abstandshaltern 141, 142 kann ein Wärmeübertrager gebildet werden. Dazu können die Folienabschnitte 131, 132 wie in den Fig. 1 und 2 gezeigt, spiralförmig aufgewickelt werden.

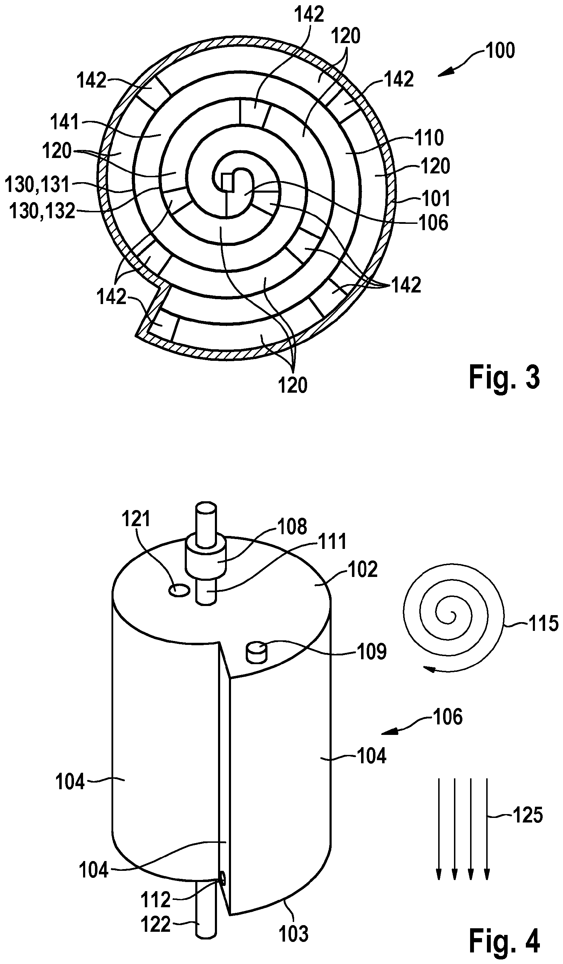

Fig. 3 zeigt einen Querschnitt durch einen Wärmeübertrager 100, bei dem Folienabschnitte 131, 132 wie in den Fig. 1 und 2 gezeigt, spiralförmig aufgewickelt sind. Der Wärmeübertrager 100 weist ein Gehäuse 101, einen ersten Fluidraum 110 und einen zweiten Fluidraum 120 auf. Das Gehäuse 101 weist eine zylindrische Form auf. Der erste Fluidraum 110 und der zweite Fluidraum 120 sind innerhalb des Gehäuses 101 angeordnet. Der erste Fluidraum 110 ist vom zweiten Fluidraum 120 mittels der Folie 130 getrennt. Die Folie 130 mit dem ersten Folienabschnitt 131 und dem zweiten Folienabschnitt 132 ist zu einer Spirale aufgewickelt. Die ersten Abstandshalter 141 sind dann zwischen dem ersten Folienabschnitt 131 und dem zweiten Folienabschnitt 132 angeordnet und die zweiten Abstandshalter sind zwischen dem zweiten Folienabschnitt 132 und dem ersten Folienabschnitt 131 angeordnet derart, dass der erste Fluidraum 110 vom ersten Folienabschnitt 131, vom zweiten Folienabschnitt 132 und von den ersten Abstandshaltern 141 begrenzt wird und dass der zweite Fluidraum 110 vom ersten Folienabschnitt 131, vom zweiten Folienabschnitt 132 und von den zweiten Abstandshaltern 142 begrenzt wird.

In Fig. 3 ist optional dargestellt, dass ein Innenrohr 106 des Gehäuses 101 den ersten Folienabschnitt 131 und den zweiten Folienabschnitt 132 derart verbindet, dass ein Inneres des Innenrohres 106 mit dem ersten Fluidraum 110 verbunden ist, der erste Fluidraum 110 also mittels des Innenrohres 106 zugänglich ist.

Fig. 4 zeigt eine isometrische Ansicht des Wärmeübertragers 100 der Fig. 3. Ein erster Fluidraumeinlass 111 und ein erster Fluidraumauslass 112 sind mit dem ersten Fluidraum 110 verbunden. Ein zweiter Fluidraumeinlass 121 und ein zweiter Fluidraumauslass 122 sind mit dem zweiten Fluidraum 120 verbunden.

Optional ermöglicht der erste Fluidraum 110 zwischen dem ersten Fluidraumeinlass 111 und dem ersten Fluidraumauslass 112 einen spiralförmigen ersten Fluidfluss 115. Der zweite Fluidraum 120 zwischen dem zweiten Fluidraumeinlass 121 und dem zweiten Fluidraumauslass 122 ermöglicht einen zweiten Fluidfluss 125 zumindest teilweise senkrecht zum ersten Fluidfluss 115. Der erste Fluidfluss 115 folgt damit der Spirale der Folie 130.

Wird der Wärmeübertrager mit einer Flüssigkeit als Fluid im ersten Fluidraum und/oder zweiten Fluidraum betrieben, kann ein Durchfluss des Fluids kleiner als zehn Milliliter pro Sekunde sein und insbesondere im Bereich von einem Milliliter pro Sekunde liegen.

Optional weist das Gehäuse 101 des Wärmeübertragers 100 der Fig. 4 einen Deckel 102, einen Boden 103 und eine Mantelfläche 105 auf. Der Deckel 102 und der Boden 103 bilden jeweils eine ebene geschlossene Fläche. Der erste Fluidraumeinlass 111 ist am Deckel 102 angeordnet, kann aber alternativ auch am Boden 103 angeordnet sein. Der erste Fluidraumauslass 112 ist an der Mantelfläche 104 angeordnet. Der zweite Fluidraumeinlass 121 ist am Deckel 102 angeordnet. Der zweite Fluidraumauslass 122 ist am Boden 103 angeordnet. Es kann vorgesehen sein, dass die ersten Abstandshalter 141 den ersten Fluidraum 110 in Richtung des Deckels 102 und des Bodens 103 abdichten.

Die zylindrische Form des Gehäuses 101 kann insbesondere einen geraden Zylinder umfassen, wie in Fig. 4 gezeigt ist. Der Deckel 102 und der Boden 103 sind dabei durch eine Leitkurve definiert, die in Fig. 4 eine Spiralwindung umfasst, wobei die Spiralwindung an die Spirale der Folie 130 angepasst ist. Alternativ kann eine Leitkurve des Zylinders auch ein Kreis oder eine Ellipse sein. Ein Durchmesser des Zylinders und damit des Gehäuses 101 kann beispielsweise im Bereich zwischen fünf und dreißig Zentimetern liegen, insbesondere zwischen acht und fünfzehn Zentimetern. Eine Höhe des Zylinders und damit des Gehäuses, also der Abstand zwischen Deckel 102 und Boden 103, kann beispielsweise zwanzig bis dreißig Zentimeter betragen. Die Folie 130 kann eine Foliendicke im Bereich zwischen einem hundertstel Millimeter und einem halben Millimeter aufweisen. Insbesondere kann die Foliendicke im Bereich von 0,05 bis 0,2 Millimeter liegen. Die ersten Abstandshalter 141 und die zweiten Abstandshalter 142 können dabei eine Dicke zwischen einem halben und fünf Millimetern aufweisen, so dass ein Abstand zwischen dem ersten Folienabschnitt 131 und dem zweiten Folienabschnitt 132 beziehungsweise zwischen dem zweiten Folienabschnitt 132 und dem ersten Folienabschnitt 131 ebenfalls zwischen einem halben und fünf Millimetern ist. Insbesondere kann der Abstand einen Millimeter betragen. Wird der Wärmeübertrager 100 mit einer Flüssigkeit als Fluid im ersten Fluidraum 110 und/oder zweiten Fluidraum betrieben 120, kann ein Durchfluss des Fluids kleiner als zehn Milliliter pro Sekunde sein und insbesondere im Bereich von einem Milliliter pro Sekunde liegen. Sowohl die Folie 130 als auch die Abstandshalter 141, 142 können aus einem Material gefertigt sein, das bis 130 Grad Celsius, insbesondere bis 150 Grad Celsius temperaturstabil ist.

Die Folie 130 ist deutlich weniger Anfällig für Verkalkungen, so dass der Wärmeübertrager 100 einfacher zu warten ist. Ferner kann ein einfaches Reinigungsverfahren für den Wärmeübertrager 100 bereitgestellt werden, bei dem über den ersten Fluidraumeinlass 111 oder den ersten Fluidraumauslass 112 oder den zweiten Fluidraumeinlass 121 oder den zweiten Fluidraumauslass 122 ein hydraulischer Druckstoß mittels eines optionalen Druckstoßerzeugers 108 in den Wärmeübertrager 100 eingebracht wird (in Fig. 4 exemplarisch am ersten Fluidraumeinlass 111 angeordnet) oder wobei das Gehäuse mittels eines optionalen Vibrationserzeugers 109 in Vibration versetzt wird. Der Vibrationserzeuger 109 ist beispielhaft am Deckel 102 angeordnet. Etwaige Verkalkungen werden durch den hydraulischen Druckstoß oder die Vibration von der Folie 130 gelöst und können so aus dem Wärmeübertrager 100 entfernt werden.

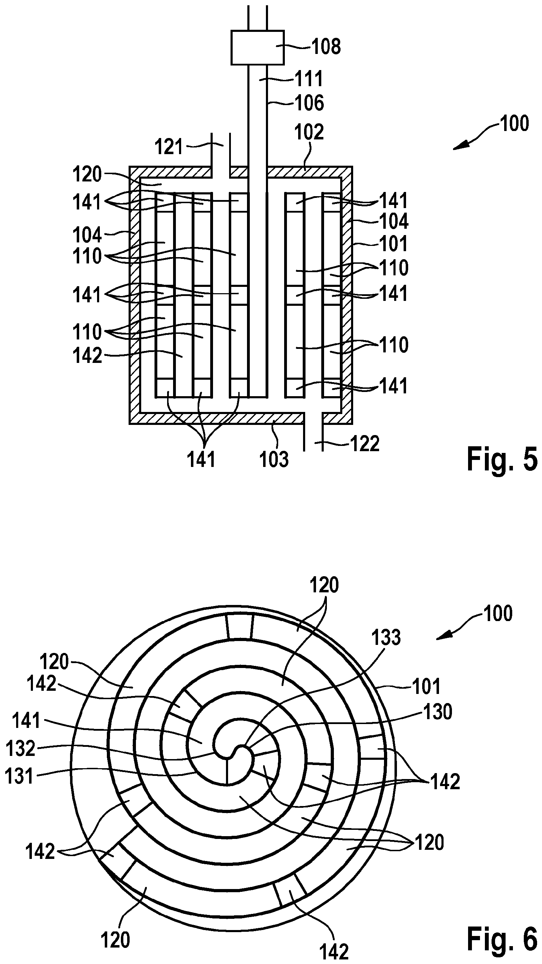

Fig. 5 zeigt einen weiteren Querschnitt durch den Wärmeübertrager 100 der Fig. 3 und 4. In dieser Darstellung wird insbesondere deutlich, dass die ersten Abstandshalter 141 den ersten Fluidraum 110 in Richtung des Deckels 102 und des Bodens 103 abdichten. Der zweite Fluidraum 120 ist oberhalb der ersten Abstandshalter 141 am Deckel 102 beziehungsweise unterhalb der ersten Abstandshalter 141 am Boden 103 über die gesamten Flächen geführt mit Ausnahme des Bereichs des Innenrohres 106.

Fig. 6 zeigt einen Querschnitt durch einen weiteren Wärmeübertrager 100, der dem Wärmeübertrager 100 der Fig. 3 bis 5 entspricht, sofern im Folgenden keine Unterschiede beschrieben sind. Der erste Folienabschnitt 131 und der zweite Folienabschnitt 132 sind mittels eines Folienfaltabschnittes 133 der Folie 130 verbunden. Der erste Folienabschnitt 131 und der zweite Folienabschnitt 132 sind also mittels einer durchgehenden Folie 130 gebildet. Ferner ist das Gehäuse 101 des Wärmeübertragers 100 zylindrisch mit kreisförmiger Leitkurve.

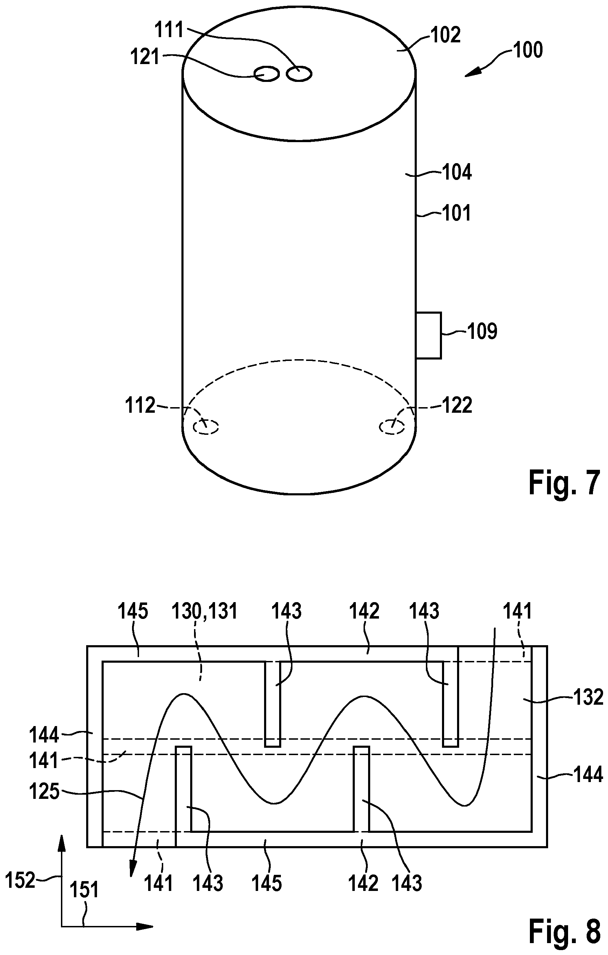

Fig. 7 zeigt eine isometrische Ansicht des Wärmeübertragers 100 der Fig. 6, wobei ferner ein Vibrationserzeuger 109 an der Mantelfläche 104 angeordnet ist.

Fig. 8 zeigt eine alternative Ausgestaltung der Folienabschnitte 131, 132 in einer zu Fig. 2 analogen Darstellung. Auch diese Variante könnte in den Wärmeübertragern 100 der Fig. 3 bis 7 zum Einsatz kommen. Die Folienabschnitte 131, 132 sowie die ersten Abstandshalter 141 sind analog zu Fig. 2 ausgestaltet. Die zweiten Abstandshalter 142 sind derart ausgestaltet, dass eine mehr am Gegenstromprinzip angelehnte Führung des zweiten Fluidflusses 125 erfolgt, da die zweiten Abstandshalter 142 in die zweite Richtung 152 ausgerichtete, versetzt angeordnete Zwischenstege 143, in der zweiten Richtung 152 über die gesamte Breite des zweiten Folienabschnitts 132 erstreckte Endstege 144 und die Zwischenstege 143 und jeweils einen Endsteg 144 verbindende Randstege 145 aufweist, wobei die Randstege 145 in der ersten Richtung 151 ausgerichtet sind. Dadurch ergibt sich ein verlängerter Weg des zweiten Fluidflusses 125 durch den zweiten Fluidraum 120, nachdem die Folie 130 zu einer Spirale aufgewickelt wurde.

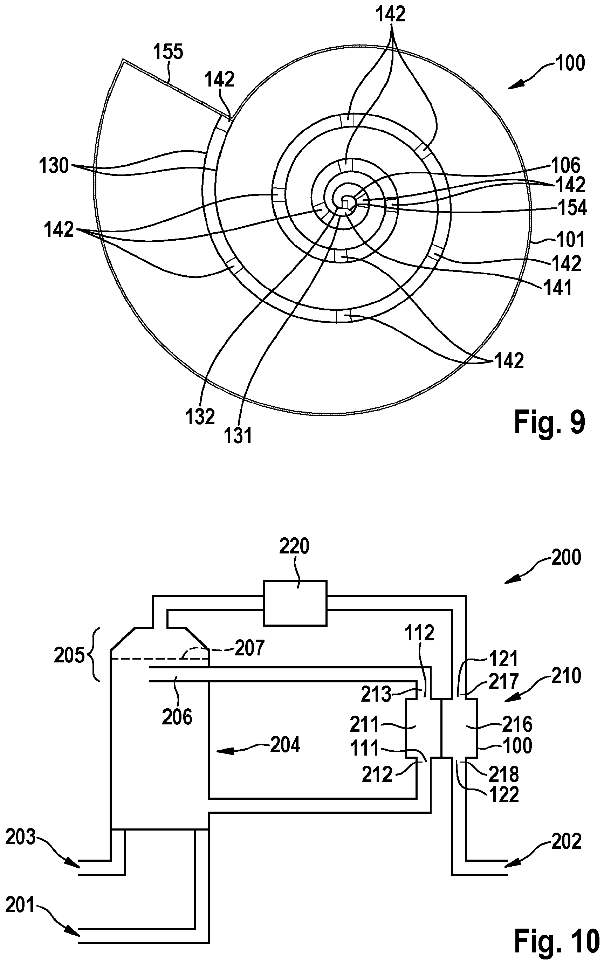

Fig. 9 zeigt einen Querschnitt durch einen Wärmeübertrager 100, der dem Wärmeübertrager 100 der Fig. 3 bis 5 entspricht, sofern im Folgenden keine Unterschiede beschrieben sind. Die ersten Abstandshalter 141 weisen einen in einer Richtung 153 senkrecht zur Folie 130 vom Inneren 154 zum Äußeren 155 der Spirale größer werdenden Querschnitt auf. Dies ermöglicht, im ersten Fluidraum 110 einen Phasenübergang von flüssig nach gasförmig zu erreichen, wenn das Fluid in der Spirale von innen nach außen geführt wird oder einen Phasenübergang von gasförmig nach flüssig zu erreichen, wenn das Fluid in der Spirale von außen nach innen geführt wird. Dies ist also insbesondere dann vorteilhaft, wenn der Wärmeübertrager 100 in Anlagen mit Phasenübergang wie beispielsweise Wasseraufbereitungsanlagen oder Wärmepumpen zum Einsatz kommen soll.

Ein Reinigungsverfahren für einen Wärmeübertrager 100 ausgestaltet wie in den Fig. 3 bis 9 gezeigt, kann umfassen, über den ersten Fluidraumeinlass 111 oder den ersten Fluidraumauslass 112 oder den zweiten Fluidraumeinlass 121 oder den zweiten Fluidraumauslass 122 einen hydraulischen Druckstoß mittels eines Druckstoßerzeugers 108 in den Wärmeübertrager 100 einzubringen oder das Gehäuse 101 mittels Vibrationserzeuger 109 in Vibration zu versetzen. Etwaige Verkalkungen werden durch den hydraulischen Druckstoß oder die Vibration von der Folie 130 gelöst und können so aus dem Wärmeübertrager 100 entfernt werden.

Fig. 10 zeigt eine Wasseraufbereitungsanlage 200 mit einem Einlass 201 für Wasser, einem ersten Auslass 202 für aufbereitetes Wasser und einem zweiten Auslass 203 für Abwasser, einem Wassergefäß 204, einer Verdampfer-Kondensator-Einheit 210 und einem Kompressor 220. Der Einlass 201 ist mit dem Wassergefäß 204 verbunden. Das Wassergefäß 204 ist mit einem Verdampfereinlass 212 eines Verdampfers 211 der Verdampfer-Kondensator-Einheit 210 verbunden. Ein Verdampferauslass 213 des Verdampfers 211 der Verdampfer-Kondensator-Einheit 210 ist mit einem Kondensatoreinlass 217 eines Kondensators 216 der Verdampfer-Kondensator-Einheit 210 verbunden. Ein Kondensatorauslass 218 des Kondensators 216 der Verdampfer-Kondensator-Einheit 210 ist mit dem ersten Auslass 202 verbunden. Der Kompressor 220 ist zwischen dem Verdampferauslass 213 und dem Kondensatoreinlass 217 angeordnet und eingerichtet, auf der Seite des Verdampferauslasses 213 einen geringeren Druck zu erzeugen verglichen mit dem Kondensatoreinlass 217. Die Verdampfer-Kondensator-Einheit 210 ist als Wärmeübertrager 100, insbesondere analog zum Wärmeübertrager 100 der Fig. 3 bis 9, ausgestaltet.

Ist der Wärmeübertrager 100 wie in Fig. 9 gezeigt ausgestaltet, kann insbesondere der erste Fluidraumeinlass 111 den Kondensatoreinlass 217 bilden. Der erste Fluidraumauslass 112 bildet dann den Kondensatorauslass 218. Der zweite Fluidraumeinlass 121 bildet dann den Verdampfereinlass 212. Der zweite Fluidraumauslass 122 bildet dann den Verdampferauslass 213.

Optional in Fig. 10 gezeigt ist noch ein Tropfenabscheider 205 zwischen dem Verdampferauslass 213 und dem Kompressor 220, der im Wassergefäß 204 angeordnet ist und aus einer Düse 206 und einem Netz 207 besteht.

Wasser aus dem Wassergefäß 204 wird im Verdampfer 211 verdampft, wobei gegebenenfalls mitgerissene Wassertropfen im Tropfenabscheider 205 entfernt werden. Anschließend wird der Wasserdampf über den Kompressor 220 zum Kondensator 216 geführt und dort kondensiert, so dass über den ersten Auslass 202 gereinigtes Wasser abgegeben werden kann. Bei der Kondensation entstehende Kondensationswärme kann auf Wasser im Verdampfer 211 übertragen werden und so dieses zum Verdampfen bringen. Durch diese Wärmerückgewinnung ist nur eine geringe Heizleistung, beispielsweise im Verdampfer 211 oder im Wassergefäß 204 notwendig, um destilliertes Wasser zu erzeugen.

Der zweite Folienabschnitt 132 ist so auf die ersten Abstandshalter 141 aufgebracht, dass der zweite Folienabschnitt 132 an die ersten Abstandshalter 141 angrenzt.

## Patentansprüche

1. Wärmeübertrager (100), aufweisend ein Gehäuse (101), einen ersten Fluidraum (110), einen zweiten Fluidraum (120), einen ersten Fluidraumeinlass (111) und einen ersten Fluidraumauslass (112) des ersten Fluidraums (110), einen zweiten Fluidraumeinlass (121) und einen zweiten Fluidraumauslass (122) des zweiten Fluidraums (120), wobei das Gehäuse (101) eine zylindrische Form aufweist, wobei der erste Fluidraum (110) und der zweite Fluidraum (120) innerhalb des Gehäuses (101) angeordnet sind, wobei der erste Fluidraum (110) vom zweiten Fluidraum (120) mittels einer Folie (130) getrennt ist, wobei die Folie (130) zumindest einen ersten Folienabschnitt (131) und einen zweiten Folienabschnitt (132) aufweist, wobei der erste Folienabschnitt (131) und der zweite Folienabschnitt (132) zu einer Spirale aufgewickelt sind, wobei erste Abstandshalter (141) zwischen dem ersten Folienabschnitt (131) und dem zweiten Folienabschnitt (132) angeordnet sind und zweite Abstandshalter (142) zwischen dem zweiten Folienabschnitt (132) und dem ersten Folienabschnitt (131) angeordnet sind derart, dass der erste Fluidraum (110) vom ersten Folienabschnitt (131), vom zweiten Folienabschnitt (132) und von den ersten Abstandshaltern (141) begrenzt wird und dass der zweite Fluidraum (110) vom ersten Folienabschnitt (131), vom zweiten Folienabschnitt (132) und von den zweiten Abstandshaltern (142) begrenzt wird, wobei die ersten Abstandshalter (141) zumindest teilweise in einer ersten Richtung (151) auf dem ersten Folienabschnitt (131) angeordnet sind und wobei die zweiten Abstandshalter (142) zumindest teilweise in einer zweiten Richtung (152) auf dem zweiten Folienabschnitt (132) angeordnet sind, wobei die erste Richtung (151) und die zweite Richtung (152) linear unabhängig sind.

2. Wärmeübertrager (100) nach Anspruch 1, wobei der erste Fluidraum (110) zwischen dem ersten Fluidraumeinlass (111) und dem ersten Fluidraumauslass (112) einen spiralförmigen ersten Fluidfluss (115) ermöglicht und wobei der zweite Fluidraum (120) zwischen dem zweiten Fluidraumeinlass (121) und dem zweiten Fluidraumauslass (122) einen zweiten Fluidfluss (125) zumindest teilweise senkrecht zum ersten Fluidfluss (115) ermöglicht.

3. Wärmeübertrager (100) nach Anspruch 1 oder 2, wobei das Gehäuse (101) einen Deckel (102), einen Boden (103) und eine Mantelfläche (105) umfasst, wobei der Deckel (102) und der Boden (103) jeweils eine ebene geschlossene Fläche bilden, wobei der erste Fluidraumeinlass (111) am Deckel (102) oder am Boden (103) angeordnet ist und der erste Fluidraumauslass (112) an der Mantelfläche (104) angeordnet ist, wobei der zweite Fluidraumeinlass (121) am Deckel (102) angeordnet ist und der zweite Fluidraumauslass (122) am Boden (103) angeordnet ist.

4. Wärmeübertrager (100) nach einem der Ansprüche 1 bis 3, wobei der erste Folienabschnitt (131) und der zweite Folienabschnitt (132) mittels eines Folienfaltabschnittes (133) der Folie (130) verbunden sind.

5. Wärmeübertrager (100) nach einem der Ansprüche 1 bis 3, wobei der erste Folienabschnitt (131) und der zweite Folienabschnitt (132) mittels eines Innenrohres (106) verbunden sind.

6. Wärmeübertrager (100) nach einem der Ansprüche 1 bis 5, wobei die Folie (130) eine Kunststofffolie ist, insbesondere eine Folie aus Polyvinylidenfluorid oder Polyimid.

7. Wärmeübertrager (100) nach einem der Ansprüche 1 bis 6, wobei der erste Abstandshalter (141) und/oder der zweite Abstandshalter (142) einen Streifen aus Klebstoff und/oder Silikon umfassen.

8. Wärmeübertrager (100) nach einem der Ansprüche 1 bis 7, wobei die ersten Abstandshalter (141) einen in einer Richtung (153) senkrecht zur Folie (130) vom Inneren (154) zum Äußeren (155) der Spirale größer werdenden Querschnitt aufweisen.

9. Reinigungsverfahren für einen Wärmeübertrager (100) nach einem der Ansprüche 1 bis 8, wobei über den ersten Fluidraumeinlass (111) oder den ersten Fluidraumauslass (112) oder den zweiten Fluidraumeinlass (121) oder den zweiten Fluidraumauslass (122) ein hydraulischer Druckstoß mittels eines Druckstoßerzeugers (108) in den Wärmeübertrager (100) eingebracht wird oder wobei das Gehäuse (101) mittels Vibrationserzeuger (109) in Vibration versetzt wird.

10. Wasseraufbereitungsanlage (200) mit einem Einlass (201) für Wasser, einem ersten Auslass (202) für aufbereitetes Wasser und einem zweiten Auslass (203) für Abwasser, einem Wassergefäß (204), einer Verdampfer-Kondensator-Einheit (210) und einem Kompressor (220), wobei der Einlass (201) mit dem Wassergefäß (204) verbunden ist, wobei das Wassergefäß (204) mit einem Verdampfereinlass (212) eines Verdampfers (211) der Verdampfer-Kondensator-Einheit (210) verbunden ist, wobei ein Verdampferauslass (213) des Verdampfers (211) der Verdampfer-Kondensator-Einheit (210) mit einem Kondensatoreinlass (217) eines Kondensators (216) der Verdampfer-Kondensator-Einheit (210) verbunden ist, wobei ein Kondensatorauslass (218) des Kondensators (216) der Verdampfer-Kondensator-Einheit (210) mit dem ersten Auslass (202) verbunden ist, wobei der Kompressor (220) zwischen dem Verdampferauslass (213) und dem Kondensatoreinlass (217) angeordnet ist, wobei der Kompressor (220) eingerichtet ist, auf der Seite des Verdampferauslasses (213) einen geringeren Druck zu erzeugen als auf der Seite des Kondensatoreinlasses (217), wobei die Verdampfer-Kondensator-Einheit (210) als Wärmeübertrager (100) nach einem der Ansprüche 1 bis 8 ausgestaltet ist.
